# EUROPÄISCHE PATENTSCHRIFT

(11) **EP 3 395 726 B1**
(45) Veröffentlichungstag und Bekanntmachung des Hinweises auf die Patenterteilung: **30.09.2020**
(21) Anmeldenummer: 18153815.8
(22) Anmeldetag: 29.01.2018
(51) Int. Cl.: B65G 25/02

(54) **VERFAHREN UND VORRICHTUNG ZUM SCHRITTWEISEN TRANSPORT VON PRODUKTEN ENTLANG EINER TRANSPORTSTRECKE**
METHOD AND DEVICE FOR SEQUENTIAL TRANSPORT OF PRODUCTS ALONG A CONVEYING SECTION
PROCÉDÉ ET DISPOSITIF DE TRANSPORT PROGRESSIF DE PRODUITS LE LONG D'UN PARCOURS DE TRANSPORT

(30) Priorität: 27.04.2017 DE 102017207149
(43) Veröffentlichungstag der Anmeldung: 31.10.2018
(73) Patentinhaber: THEEGARTEN-PACTEC GMBH & CO. KG, 01237 Dresden (DE)
(72) Erfinder: Oehlert, Volker, 01809 Dohna (DE); Fuchs, Ingolf, 01099 Dresden (DE); Ehlert, Sebastian, 01237 Dresden (DE)
(74) Vertreter: Grünecker Patent- und Rechtsanwälte PartG mbB

(56) Entgegenhaltungen:
- DE-A1-102015 205 471
- US-A- 1 919 199
- US-A1- 2010 032 265
- US-A1- 2013 157 210

## Beschreibung

Die vorliegende Erfindung betrifft ein Verfahren und eine Vorrichtung zum schrittweisen Transport von Produkten entlang einer Transportstrecke, und insbesondere ein intermittierendes Verfahren sowie eine entsprechend arbeitende Vorrichtung zum schrittweisen Transport von kleinstückigen Süßwarenartikeln, Brühwürfeln, Brühtabletten oder anderweitigen Nahrungsmitteln mittels Kammbewegung.

Bei der Analyse bisheriger Transportverfahren mittels Kammbewegung hat sich gezeigt, dass ein schrittweiser Produkttransport nur bis zu solchen Transportfrequenzen gut funktioniert, bis die Reibung zwischen den Produkten und den feststehenden Führungselementen nicht mehr zum Abbremsen der Produkte ausreicht. Die Folge ist, dass die Produkte bei hoher Taktzahl trotz Kammverzögerung weiter rutschen und eine unkontrollierte Lage einnehmen. Dies führt dazu, dass nach der Rückbewegung des Kammes beim Wiederanheben von unten die Kammzinken auf die Produkte treffen und diese zerstören. Je größer die Produkttoleranzen sind, desto gravierender wirkt sich dieser Effekt bei hoher Leistung aus. Die vorhandenen Maschinen weisen funktionale und formatseitige Einschränkungen auf, die durch eine entsprechende Neuentwicklung gelöst werden sollten.

Ein Verfahren gemäß dem Oberbegriff des Anspruchs 1 bzw. eine entsprechende Vorrichtung ist aus dem Dokument DE 10 2015 205471 A1 bekannt. Der vorliegenden Erfindung liegt die Aufgabe zugrunde, ein Verfahren und eine Vorrichtung zum schrittweisen Transport von Produkten entlang einer Transportstrecke bereitzustellen, sodass Produkte mit unterschiedlichen Formaten bei hoher Transportfrequenz schadlos entlang der Transportstrecke transportiert werden können.

Zur Lösung der Aufgabe stellt die vorliegende Erfindung das Verfahren nach Anspruch 1 und die Vorrichtung nach Anspruch 3 bereit.

Das erfindungsgemäße Verfahren dient zum schrittweisen Transport von Produkten entlang einer Transportstrecke unter Verwendung von ersten und zweiten Transportelementen, die auf wenigstens einer Bewegungsbahn zyklisch entlang und entgegen der Transportstrecke bewegbar sind, wobei wenigstens ein Produkt zwischen den beiden Transportelementen angeordnet und unter Veränderung des Abstands der beiden Transportelemente entlang der Transportstrecke transportiert wird, wobei das wenigstens eine Produkt durch das erste Transportelement beschleunigt und anschließend durch das zweite Transportelement abgebremst wird. Die zyklischen Bewegungen der ersten und zweiten Transportelemente entlang und entgegen der Transportstrecke entsprechen vorzugsweise harmonischen Schwingungen, deren Verlauf durch eine Sinusfunktion beschrieben werden kann. Aber auch davon abweichende Bewegungsfunktionen sind realisierbar. Demnach wird jedes Transportelement zu Beginn der Transportstrecke beschleunigt und gegen Ende der Transportstrecke abgebremst. Für hohe Transportgeschwindigkeiten bzw. -frequenzen sind in und entgegen der Transportrichtung hohe positive und negative Beschleunigungskräfte erforderlich, die über die Transportelemente möglichst schonend auf die zu transportierenden Produkte zu übertragen sind. Durch die erfindungsgemäße Vorrichtung wird das Produkt während der positiven und negativen Beschleunigung entlang der Transportstrecke in und entgegen der Transportrichtung von jeweils mindestens einem Transportelement unterstützt, sodass das Produkt auch nach hoher vorangehender Beschleunigung durch das erste Transportelement unter Verwendung des zweiten Transportelements gezielt abgebremst und zielgenau in der Ablageposition abgelegt werden kann.

Es kann von Vorteil sein, wenn das Verfahren wenigstens einen der folgenden Schritte umfasst:
- Schritt A: Anordnen des wenigstens einen Produkts auf der Transportstrecke relativ zu den beiden Transportelementen, sodass das erste Transportelement im Abstand hinter dem Produkt angeordnet ist und/oder das zweite Transportelement im Abstand vor dem Produkt angeordnet ist, vorzugsweise Anordnen einer Gruppe von Produkten auf der Transportstrecke relativ zu den beiden Transportelementen, sodass jeweils ein Eingriffsabschnitt des ersten Transportelements im Abstand hinter einem Produkt der Gruppe angeordnet ist und/oder ein Eingriffsabschnitt des zweiten Transportelements im Abstand vor dem Produkt der Gruppe angeordnet ist. Die Begriffe "hinter" und "vor" beziehen sich auf die Transportrichtung. In der Transportrichtung liegt das Ende der Transportstrecke vor dem Anfang der Transportstrecke. wobei die Produkte vom Anfang zum Ende der Transportstrecke transportiert werden. Diese relative Anordnung des wenigstens einen Produkts zu den beiden Transportelementen umfasst den Fall, dass das Produkt zu den Transportelementen hin bewegt wird, ebenso wie den Fall, dass die Transportelemente zu dem Produkt bewegt werden. Maßgeblich ist, dass zu einem Zeitpunkt des Verfahrens das erste Transportelement im Abstand hinter dem Produkt angeordnet ist und/oder das zweite Transportelement im Abstand vor dem Produkt angeordnet ist (in Transportrichtung). So kann sich das Produkt bereits auf der Transportstrecke befinden, wenn die Transportelemente zu dem Produkt hin bewegt werden. Es ist aber auch möglich, dass das Produkt bspw. während der Bewegung der Transportelemente zwischen den Transportelementen positioniert wird.
- Schritt B: Bewegen des ersten Transportelements in Richtung des wenigstens einen Produkts, um das erste Transportelement mit dem wenigstens einen Produkt in Eingriff zu bringen.
- Schritt C: Beschleunigen des wenigstens einen Produkts entlang der Transportstrecke.
- Schritt D: Verkürzen des Abstands zwischen dem ersten Transportelement und dem zweiten Transportelement, vorzugsweise derart, dass das wenigstens eine Produkt mit dem zweiten Transportelement in Eingriff gelangt, bevorzugt während das wenigstens eine Produkt mit dem ersten Transportelement in Eingriff steht, wobei besonders bevorzugt der minimale Abstand der Transportelemente der Länge des wenigstens einen Produkts entspricht und/oder am Ende der Transportstrecke erreicht wird. Vorzugsweise sind die Bewegungen der Transportelemente derart aufeinander abgestimmt, dass sich der Abstand der Transportelemente bei der Bewegung in der Transportrichtung vom Beginn der Transportstrecke bis zum Ende der Transportstrecke stetig verringert und/oder bei der Bewegung entgegen der Transportrichtung vom Ende der Transportstrecke bis zum Beginn der Transportstrecke stetig vergrößert. Vorzugsweise ist der minimale Abstand der Transportelemente verstellbar.
- Schritt E: Abbremsen des ersten Transportelements bezüglich der Transportstrecke, vorzugsweise während das wenigstens eine Produkt mit dem ersten Transportelement in Eingriff gehalten wird. Es ist theoretisch möglich, dass das erste Transportelement bereits vor dem Ende der Transportstrecke abgebremst wird, sodass das Produkt aufgrund seiner Trägheit außer Eingriff mit dem ersten Transportelement gelangt und somit an das zweite Transportelement "übergeben" wird. Vorzugsweise sind die Bewegungen der Transportelemente in der Transportrichtung derart aufeinander abgestimmt, dass der minimale Abstand zwischen den Transportelementen erst am Ende der Transportstrecke erreicht wird.
- Schritt F: Abbremsen des zweiten Transportelements bezüglich der Transportstrecke, vorzugsweise derart, dass das wenigstens eine Produkt mit dem zweiten Transportelement in Eingriff gehalten wird oder in Eingriff gelangt, bevorzugt derart, dass das wenigstens eine Produkt auf der Transportstrecke zum Stillstand gebracht wird, besonders bevorzugt in einer Übergabeposition an eine nachgelagerte Fördereinrichtung oder zum fortgeführten Transport durch die Transportstrecke.
- Schritt G: Außer-Eingriff-bringen des ersten Transportelements und des wenigstens einen Produkts, vorzugsweise in einer Übergabeposition an eine nachgelagerte Fördereinrichtung oder zum fortgeführten Transport durch die Transportstrecke.
- Schritt H: Außer-Eingriff-bringen des zweiten Transportelements und des wenigstens einen Produkts, vorzugsweise in einer Übergabeposition an eine nachgelagerte Fördereinrichtung oder zum fortgeführten Transport durch die Transportstrecke, bevorzugt gleichzeitig mit Schritt G.
- Schritt I: Bewegen des ersten Transportelements entgegen der Transportstrecke, vorzugsweise in einem von den Produkten getrennten Zustand, bevorzugt unterhalb der Transportstrecke.
- Schritt J: Bewegen des zweiten Transportelements entgegen der Transportstrecke, vorzugsweise in einem von den Produkten getrennten Zustand, bevorzugt unterhalb der Transportstrecke, besonders bevorzugt gleichzeitig in Schritt I.
- Schritt K: Wiederholen der Schritte A bis J.

Die erfindungsgemäße Vorrichtung dient ebenso zum schrittweisen Transport von Produkten entlang einer Transportstrecke z. B. in einem, zwei oder mehr Schritten, insbesondere zur Durchführung des Verfahrens nach einer der vorangehenden Ausführungen, und umfasst erste und zweite Transportelemente, die auf wenigstens einer Bewegungsbahn zyklisch entlang und entgegen der Transportstrecke bewegbar sind, um wenigstens ein zwischen den beiden Transportelementen angeordnetes Produkt unter Veränderung des Abstands der beiden Transportelemente entlang der Transportstrecke zu transportieren, sodass das wenigstens eine Produkt durch das erste Transportelement beschleunigt und anschließend durch das zweite Transportelement abgebremst wird.

Es kann sinnvoll sein, wenn beide Transportelemente jeweils eine eigene Basis aufweisen, die unterhalb der Transportstrecke angeordnet ist, wobei zum Transport des wenigstens einen Produkts entlang der Transportstrecke wenigstens ein von der Basis vorstehender Eingriffsabschnitt jedes Transportelements über die Oberfläche der Transportstrecke vorgestellt wird, vorzugsweise durch eine schlitzförmige Öffnung in der Oberfläche der Transportstrecke, um mit dem wenigstens einen Produkt in Eingriff zu gelangen, wobei bevorzugt der wenigstens eine Eingriffsabschnitt jedes Transportelements zur Bewegung der Transportelemente entgegen der Transportstrecke unter die Transportstrecke zurückgestellt wird. Durch diese Maßnahmen kann der gesamte Antriebsmechanismus unter die Transportstrecke verlegt werden, wobei nur ein vergleichsweise kleiner Eingriffsabschnitt mit dem zu transportierenden Produkt in Kontakt gelangt. Dies ermöglicht, die Abstände der zu transportierenden Produkte in Transportrichtung entlang der Transportstrecke zu minimieren, sodass die Vorrichtung besonders kompakt ausgebildet werden kann.

Es kann sich als nützlich erweisen, wenn beide Transportelemente jeweils dieselbe Mehrzahl von Eingriffsabschnitten aufweisen und zum schrittweisen Transport einer Gruppe von Produkten entlang der Transportstrecke ausgebildet sind, wobei jeweils ein Produkt der Gruppe zwischen einem Eingriffsabschnitt des ersten Transportelements und einem korrespondierenden Eingriffsabschnitt des zweiten Transportelements angeordnet und unter Veränderung des Abstands der beiden Eingriffsabschnitte entlang der Transportstrecke transportiert werden kann, sodass das Produkt durch den Eingriffsabschnitt des ersten Transportelements beschleunigt und anschließend durch den Eingriffsabschnitt des zweiten Transportelements abgebremst wird. Mit diesen Merkmalen kann auf einfache Weise eine Transportvorrichtung mit hoher Transportkapazität geschaffen werden, die in der Lage ist, eine Vielzahl von Produkten mit hoher Genauigkeit, hoher Geschwindigkeit und hoher Frequenz entlang der Transportstrecke schadlos zu transportieren. Vorzugsweise sind die ersten und zweiten Transportelemente als Transportkämme ausgebildet.

Es kann aber auch hilfreich sein, wenn die Bewegungsbahnen und/oder Transporthübe beider Transportelemente voneinander unterschiedlich sind, wobei vorzugsweise die Bewegungsbahn und/oder der Transporthub des ersten Transportelements länger ist als derjenige/diejenige des zweiten Transportelements, wobei bevorzugt die Bewegungsbahnen und/oder Transporthübe beider Transportelemente in zueinander parallelen und/oder senkrecht zur Oberfläche der Transportstrecke ausgerichteten Ebenen liegen, wobei die Oberfläche der Transportstrecke besonders bevorzugt in einer horizontalen Ebene liegt. Auf diese Weise können die Transportelemente bzw. deren Antriebsmechanismen möglichst kompakt und platzsparend nebeneinander angeordnet werden.

Es kann sich als praktisch erweisen, wenn beide Transportelemente drehzahlsynchron und/oder phasensynchron entlang ihrer jeweiligen Bewegungsbahnen bewegbar sind, wobei die Transportelemente bezüglich der Transportstrecke vorzugsweise harmonische Schwingungen ausführen. Drehzahlsynchron bedeutet in diesem Zusammenhang, dass die beiden Transportelemente für jeweils einen Umlauf auf der Bewegungsbahn gleich lange benötigen. Phasensynchron bedeutet in diesem Zusammenhang, dass sich die Transportelemente während jedes Umlaufs um die Bewegungsbahn jeweils zeitgleich an derselben Stelle der Bewegungsbahn befinden, d.h. in gleicher Phase.

Es kann aber auch von Nutzen sein, wenn das erste Transportelement und/oder das zweite Transportelement mit veränderlicher Bahngeschwindigkeit und/oder konstanter Flächengeschwindigkeit (Fläche, welche die Verbindungslinie zwischen Zentrum der Bewegungsbahn und Transportelement pro Zeit überstreicht) entlang der jeweiligen Bewegungsbahn bewegbar ist/sind, wobei vorzugsweise die Bahngeschwindigkeit und/oder Flächengeschwindigkeit des ersten Transportelements größer ist als diejenige des zweiten Transportelements.

Es kann überdies auch nützlich sein, wenn die Bewegungen der beiden Transportelemente derart aufeinander abgestimmt sind, dass sich der Abstand der beiden Transportelemente bei der Bewegung entlang der Transportstrecke verringert und bei der Bewegung entgegen der Transportstrecke vergrößert, wobei vorzugsweise der minimale Abstand der Transportelemente der Länge des wenigstens einen Produkts entspricht und/oder am Ende der Transportstrecke erreicht wird.

Es kann sich aber auch als nützlich erweisen, wenn die beiden Transportelemente über jeweils wenigstens ein eigenes Antriebsglied und/oder wenigstens ein gemeinsames Antriebsglied mit einem gemeinsamen Antriebssystem verbunden sind, wobei vorzugsweise die Horizontalbewegungen und die Vertikalbewegungen der Transportelemente über eigene Kurvenantriebe gesteuert werden, wobei bevorzugt die Horizontalbewegungen der Transportelemente den Transporthüben der Transportelemente entsprechen und unterschiedlich lang sind, wobei die Vertikalbewegungen der Transportelemente nahezu gleich lang sind.

Weitere vorteilhafte Weiterbildungen der vorliegenden Erfindung ergeben sich durch Kombinationen der in den Ansprüchen, der Beschreibung und Zeichnungen offenbarten Merkmale.

### Begriffe und Definitionen

### Produkte

Vorzugsweise sind die Produkte kleinstückige Süßwarenartikel, Brühwürfel, Brühtabletten oder anderweitige Nahrungsmittel, die im Hinblick auf wenigstens eines der Merkmale identisch ausgebildet sind: Form, Abmessungen, Gewicht und Ausrichtung bezüglich der Bewegungsrichtung.

Die der Transportstrecke zugeführten Produkte können sich in Anordnungs- bzw. Bewegungsrichtung kontaktieren oder voneinander beabstandet sein. Die Produkte können in einreihigen oder mehrreihigen Produktströmen transportiert werden. Bei einem einreihigen Produktstrom sind die Produkte einzeln hintereinander angeordnet, bei einem mehrreihigen Produktstrom sind mehrere Produkte quer zur Bewegungsrichtung nebeneinander angeordnet. Der Produktstrom im Rahmen der vorliegenden Erfindung kann ein- oder mehrreihig ausgebildet sein.

### Transportstrecke

Die Transportstrecke bezeichnet den Teil der Vorrichtung, auf welchem die Produkte während der Handhabung durch die Vorrichtung transportiert werden. Die Transportrichtung entspricht dabei der Bewegungsrichtung der im Produktstrom transportierten Produkte und verläuft entlang der Transportstrecke. Die Bezeichnung "entlang der Transportstrecke" gibt den Richtungsverlauf an, in welchem die Produkte auf der Transportstrecke transportiert werden und ist gleichbedeutend mit der Bezeichnung "in Transportrichtung", während die Bezeichnung "entgegen der Transportstrecke" gleichbedeutend mit der Bezeichnung "entgegen der Transportrichtung" ist.

### Zyklische Bewegung

Die zyklischen Bewegungen der ersten und zweiten Transportelemente entlang und entgegen der Transportstrecke entsprechen vorzugsweise harmonischen Schwingungen, deren Verlauf durch eine Sinusfunktion beschrieben werden kann. Aber auch davon abweichende Bewegungsfunktionen sind realisierbar.

### Schrittweiser Transport

Der Begriff "schrittweiser Produkttransport" bezeichnet im Rahmen dieser Erfindung den durch die zyklischen Bewegungen der Transportelemente veranlassten Transport von Produkten entlang der Transportstrecke, wobei das Produkt entlang der Transportstrecke beschleunigt und anschließend wieder abgebremst wird.

### Bewegungsbahnen

Anspruchsgemäß werden die beiden Transportelemente auf wenigstens einer Bewegungsbahn zyklisch entlang und entgegen der Transportstrecke bewegt. Dies bringt zum Ausdruck, dass sich die beiden Transportelemente auf derselben Bewegungsbahn oder auf unterschiedlichen Bewegungsbahnen bewegen können. Demnach haben die Transportelemente entlang und entgegen der Transportstrecke nicht zwangsläufig denselben Bewegungsablauf, obwohl dies grundsätzlich möglich ist. Die Transportelemente werden vorzugsweise auf jeweils einer eigenen Bewegungsbahn in derselben Richtung bewegt. Wenn die Transportelemente auf derselben Bewegungsbahn bewegt werden, sind die Transportelemente vorzugsweise individuell antreibbar, sodass die Abstände der beiden Transportelemente in der gewünschten Weise verändert werden können. Vorzugsweise sind die Bewegungsbahnen der beiden Transportelemente voneinander unterschiedlich und entlang der Transportstrecke teilweise überlappend zueinander angeordnet, wobei die Bewegungsbahn des zweiten Transportelements bezüglich der Transportstrecke in Transportrichtung versetzt, d.h. stromabwärts der Bewegungsbahn des ersten Transportelements angeordnet ist. Die Bewegungsbahnen der beiden Transportelemente sind vorzugsweise in sich geschlossen, beispielsweise rechteckig, kreisförmig, oval oder Kombinationen aus diesen, wobei insbesondere jeweils ein Abschnitt der Bewegungsbahn, auf welchem das Transportelement entlang der Transportstrecke bewegt wird, exakt oder im Wesentlichen parallel zur Transportstrecke verläuft.

### Transporthub

Der Transporthub entspricht der Wegstrecke, die ein Transportelement entlang der Transportstrecke zurücklegt. Vorzugsweise ist der Transporthub des zweiten Transportelements kleiner als der Transporthub des ersten Transportelements.

### Kurze Beschreibung der Zeichnungen

Es zeigen:

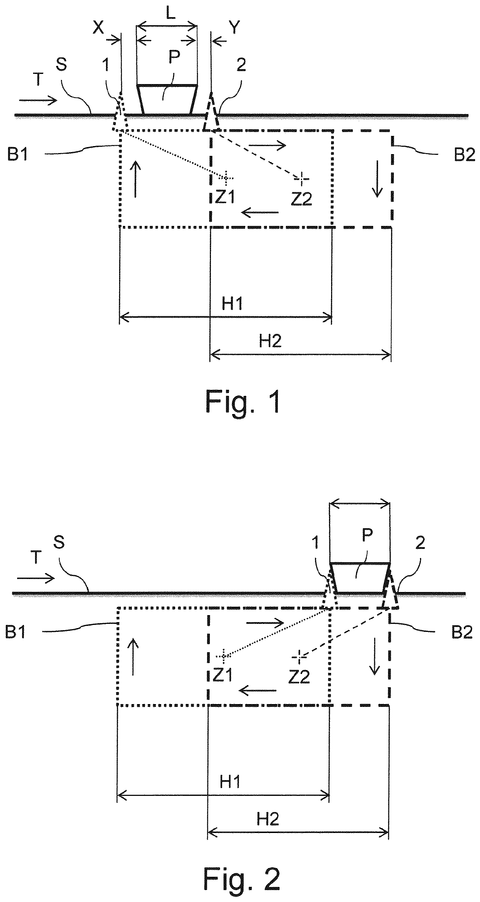

- Figur 1: eine schematische Darstellung der Bewegungsbahnen (B1, B2) und Transporthübe (H1, H2) der ersten und zweiten Transportelemente (1, 2) im Verhältnis zur Transportstrecke (S) zur Erläuterung der erfindungsgemäßen Vorrichtung sowie des erfindungsgemäßen Verfahrens, wobei die Positionen der ersten und zweiten Transportelemente (1, 2) sowie des Produkts (P) vor Beginn des Transports des Produkts (P) entlang der Transportstrecke (S) in Transportrichtung (T) schematisch dargestellt sind.
- Figur 2: eine schematische Darstellung ähnlich zu Figur 1, wobei die Positionen der ersten und zweiten Transportelemente (1, 2) sowie des Produkts (P) zum Abschluss des Transports des Produkts (P) entlang der Transportstrecke (S) schematisch dargestellt sind.

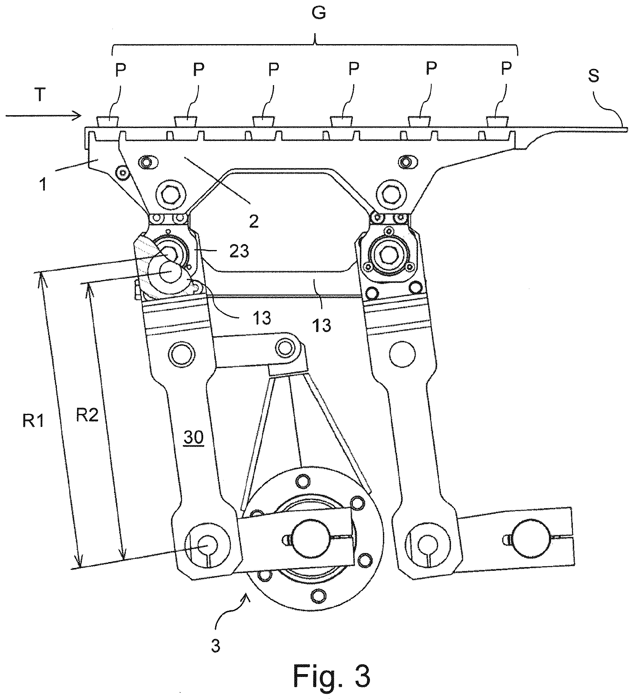

- Figur 3: eine schematische Seitenansicht von wesentlichen Teilen eines Ausführungsbeispiels der erfindungsgemäßen Vorrichtung, wobei die ersten und zweiten Transportelemente (1, 2) kammförmig ausgebildet sind und jeweils dieselbe Vielzahl von gleichmäßig voneinander beabstandeten und als Kammzinken ausgebildeten Eingriffsabschnitten (11, 21) aufweisen, wobei Mechanismen zur Ebenenführung der ersten und zweiten Transportelemente (1, 2) im Detail dargestellt sind.

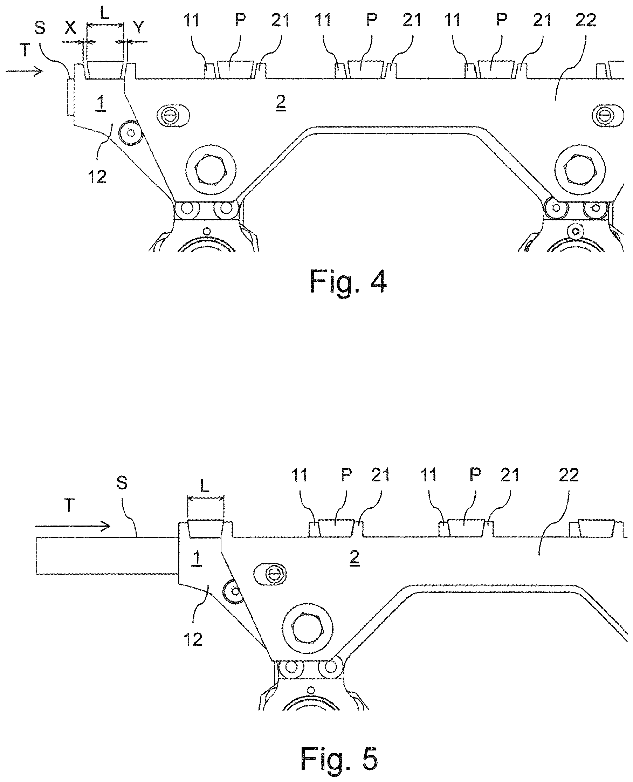

- Figur 4: eine schematische Detailansicht des Ausführungsbeispiels gemäß Figur 3 zum Zeitpunkt des Auftauchens der ersten und zweiten Transportelemente (1, 2) über die Transportstrecke (S), wobei die Eingriffsabschnitte (11, 21) der ersten und zweiten Transportelemente (1, 2) jeweils stromaufwärts und stromabwärts des Produkts (P) im Abstand (x, y) davon angeordnet sind.
- Figur 5: eine Darstellung der erfindungsgemäßen Vorrichtung zur Erläuterung des erfindungsgemäßen Verfahrens zum Zeitpunkt des Abtauchens der ersten und zweiten Transportelemente (1, 2) unter die Transportstrecke (S), wobei die Eingriffsabschnitte (11, 21) der ersten und zweiten Transportelemente (1, 2) jeweils stromaufwärts und stromabwärts des Produkts (P) in Anlage mit dem Produkt (P) stehen und somit die Abstände der Produkte (P) relativ zueinander fixieren.

### Detaillierte Beschreibung des bevorzugten Ausführungsbeispiels

Das erfindungsgemäße Verfahren und die erfindungsgemäße Vorrichtung werden nachstehend anhand der beigefügten Zeichnungen im Detail beschrieben.

Das Verfahren und die Vorrichtung gemäß dem bevorzugten Ausführungsbeispiel der Erfindung dienen zum schrittweisen Transport von kleinstückigen Produkten P in einem Produktstrom in der Transportrichtung T entlang einer horizontalen Transportstrecke S. Die zu transportierenden Produkte P sind kleinstückige Süßwarenartikel, insbesondere aus Schokolade, Brühwürfel, Brühtabletten oder anderweitige Nahrungsmittel. Jedes Produkt P weist in den Darstellungen einen trapezförmigen Querschnitt auf und ist vorzugsweise barrenförmig oder pyramidenstumpfförmig ausgebildet, wobei die größere von zwei parallelen Seiten nach oben weist und die kleinere der beiden parallelen Seiten gleitend auf der Transportstrecke S geführt wird. Das Verfahren und die Vorrichtung sind aber auch zum schrittweisen Transport von Produkten P mit anderen Formen geeignet.

Die Figuren 1 und 2 sind grob vereinfachende Darstellungen zur Erläuterung des Prinzips des erfindungsgemäßen Verfahrens und der erfindungsgemäßen Vorrichtung, wobei in einem Arbeitszyklus bzw. bei einer Bewegung der beiden Transportelemente 1, 2 entlang der Transportstrecke S jeweils ein Produkt P schrittweise in der Transportrichtung T entlang der Transportstrecke S transportiert wird. Das anhand der Figuren 1 und 2 erläuterte Prinzip ist durch entsprechende Modifikation der ersten und zweiten Transportelemente 1, 2 auf eine Gruppe G mit einer Mehrzahl von entlang der Transportstrecke S hintereinander angeordneten Produkten P übertragbar, wie später im Zusammenhang mit den Figuren 3 bis 5 im Detail beschrieben wird. Die in den Figuren 1 und 2 schematisch dargestellte Vorrichtung umfasst erste und zweite Transportelemente 1, 2, die auf eigenen Bewegungsbahnen B1, B2 in parallelen vertikalen Bewegungsebenen zyklisch entlang und entgegen der Transportstrecke S bewegbar sind. Zum Transport entlang der Transportstrecke S ist jeweils ein Produkt P zwischen den beiden Transportelementen 1, 2 angeordnet, sodass es durch das erste Transportelement 1 beschleunigt und anschließend durch das zweite Transportelement 2 abgebremst wird.

Bei der Bewegung entlang der Transportstrecke S befindet sich mindestens eines der Transportelemente 1, 2 mit dem entlang der Transportstrecke S transportierten Produkt P in Eingriff, und beide Transportelemente 1, 2 werden außer Eingriff mit den entlang der Transportstrecke S transportierten Produkten P unterhalb der Transportstrecke S entgegen derselben zurückgestellt.

Die Bewegungsbahn B1 des ersten Transportelements 1 sowie das erste Transportelement 1 selbst sind in punktierten Linien dargestellt. Die Bewegungsbahn B2 des zweiten Transportelements 2 sowie das zweite Transportelement 2 selbst sind dagegen in gestrichelten Linien dargestellt. Beide Bewegungsbahnen B1, B2 sind näherungsweise rechteckig ausgebildet und weisen zu der Transportstrecke S parallele Hauptachsen sowie dazu parallele Abschnitte auf, auf denen die Transportelemente 1, 2 entlang und entgegen der Transportstrecke S bewegt werden, wie durch die Pfeile angezeigt ist. Die Bewegungsbahnen B1, B2 beider Transportelemente 1, 2 sind in parallelen Bewegungsebenen angeordnet, die parallel zur Transportrichtung T und senkrecht zur Oberfläche der Transportstrecke S ausgerichtet sind. Die Bewegungsbahn B2 des zweiten Transportelements 2 ist geringfügig gegenüber der Bewegungsbahn B1 des ersten Transportelements 1 in Transportrichtung T entlang der Transportstrecke S versetzt, sodass sich die Bewegungsbahnen B1, B2 in der dargestellten Ansicht teilweise überlappen.

Der Transporthub H1, H2 entspricht der Wegstrecke, die das Transportelement 1, 2 bei der Bewegung auf der jeweiligen Bewegungsbahn B1, B2 entlang der Transportstrecke S zurücklegt. Der Transporthub H1 des ersten Transportelements 1 ist größer als der Transporthub H2 des zweiten Transportelements 2.

Beide Transportelemente 1, 2 werden vorzugsweise drehzahlsynchron und phasensynchron mit jeweils im Wesentlichen konstanter Flächengeschwindigkeit in gleicher Richtung entlang ihrer jeweiligen Bewegungsbahn B1, B2 bewegt, sodass das jeweilige Transportelement 1, 2 entlang und entgegen der Transportstrecke S eine zyklische Hin- und Herbewegung in der Art einer harmonischen Schwingung ausführt, die durch eine Sinuskurve beschrieben werden kann. Aber auch davon abweichende Bewegungsfunktionen sind realisierbar.

Drehzahlsynchron bedeutet in diesem Zusammenhang, dass die Transportelemente 1, 2 jeweils in derselben Zeit die eigene Bewegungsbahn B1, B2 einmal umlaufen. Phasensynchron bedeutet in diesem Zusammenhang, dass die Transportelemente 1, 2 jeweils gleichzeitig oberhalb der Transportstrecke S auftauchen und gleichzeitig unter die Transportstrecke S abtauchen. Allerdings können die Transportelemente 1, 2 auch phasenversetzt zueinander bewegt werden, wobei beispielsweise das erste Transportelement 1 vor dem zweiten Transportelement 2 über der Transportstrecke S auftaucht und/oder unter die Transportstrecke S abtaucht.

Figur 1 zeigt die Positionen der ersten und zweiten Transportelemente 1, 2 sowie des Produkts P vor Beginn des Transports des Produkts P entlang der Transportstrecke S in Transportrichtung T, während Figur 2 die Positionen der ersten und zweiten Transportelemente 1, 2 sowie des Produkts P zum Abschluss des Transports des Produkts P entlang der Transportstrecke S veranschaulicht.

Zum schrittweisen Transport des Produkts P entlang der Transportstrecke S wird in der mit Bezug auf die Figuren 1 und 2 dargestellten Ausführung des erfindungsgemäßen Verfahrens das Produkt P auf der Transportstrecke S angeordnet, sodass das erste Transportelement 1 im Abstand X hinter dem Produkt P und das zweite Transportelement 2 im Abstand Y vor dem Produkt P angeordnet ist (Schritt A). Der Abstand der beiden Transportelemente 1, 2 ist demnach größer als die Länge L des Produkts P. Beispielsweise wird das Produkt P von einer vorgelagerten Fördereinrichtung (nicht dargestellt) von oben, d.h. quer oder senkrecht zur Oberfläche der Transportstrecke S zwischen den beiden Transportelementen 1, 2 abgesetzt.

Ausgehend von dem in Figur 1 dargestellten Zustand wird das erste Transportelement 1 entlang der Transportstrecke S in Transportrichtung T bzw. in Richtung des Produkts P bewegt und gelangt mit dem Produkt P auf dessen stromaufwärts gelegener Seite in Eingriff (Schritt B). Dabei ist es vorteilhaft, wenn die Eingriffskontur des ersten Transportelements 1 auf die entsprechende Eingriffskontur des Produkts P abgestimmt ist. Im vorliegenden Fall weist das erste Transportelement 1 an der stromabwärts liegenden Vorderseite eine nach oben weisende Schrägfläche auf, während das Produkt P an der stromaufwärts liegenden Rückseite eine nach unten weisende Schrägfläche mit einem um 180° versetzten Winkel aufweist.

Anschließend wird das Produkt P über das damit in Eingriff stehende erste Transportelement 1 entlang der Transportstrecke S beschleunigt (Schritt C).

Zugleich wird das zweite Transportelement 2 entlang seiner Bewegungsbahn B2 und entlang der Transportstrecke S bewegt, sodass das zweite Transportelement 2 dem ersten Transportelement 1 und dem damit in Eingriff stehenden Produkt P entlang der Transportstrecke S vorauseilt (Schritt D). Die Bewegungen der beiden Transportelemente 1, 2 sind durch die Konfiguration und Anordnung der Bewegungsbahnen B1, B2, insbesondere durch den verkürzten Transporthub H2 des zweiten Transportelements B2 gegenüber dem Transporthub H1 des ersten Transportelements 1, derart aufeinander abgestimmt, dass sich der Abstand zwischen dem ersten Transportelement 1 und dem zweiten Transportelement 2 während der Bewegung beider Transportelemente 1, 2 entlang der Transportstrecke S verkürzt. Im Ergebnis gelangt das Produkt P innerhalb der Transportstrecke S mit dem zweiten Transportelement 2 in Eingriff, während es von dem ersten Transportelement 1 weiter entlang der Transportstrecke S geschoben wird. Dabei wird der minimale Abstand der beiden Transportelemente 1, 2 am Ende der Transportstrecke S erreicht und die Länge L des Produkts P nicht unterschritten. Auch die Eingriffskontur des zweiten Transportelements 2 ist auf die damit in Eingriff gelangende, entsprechende Eingriffskontur des Produkts P abgestimmt. Dabei weist das zweite Transportelement 2 an der stromaufwärts liegenden Rückseite eine nach oben weisende Schrägfläche auf, während das Produkt P an der stromabwärts liegenden Vorderseite eine nach unten weisende Schrägfläche mit einem um 180° versetzten Winkel aufweist.

Am Ende der Transportstrecke S werden die beiden Transportelemente 1, 2 abgebremst (Schritte E/F). Durch Gleitreibung auf der Oberfläche der Transportstrecke S und/oder an Führungselementen würde sich die Geschwindigkeit des Produkts P entlang der Transportstrecke S ohnehin verringern. Bei hoher Transportfrequenz bzw. Taktzahl und den dazu erforderlichen Verzögerungen am Ende der Transportstrecke S könnte die Produktträgheit möglicherweise die Gleitreibung auf der Oberfläche der Transportstrecke S übersteigen und sich das Produkt P von dem ersten Transportelement 1 lösen. Um dies zu verhindern, wird das Produkt P aufgrund des Eingriffs mit dem zweiten Transportelement 2 entlang der Transportstrecke S abgebremst und vorzugsweise in einer Übergabeposition an die nachgelagerte Fördereinrichtung zum Stillstand gebracht, wobei die Lage und Ausrichtung des Produkts P exakt bestimmt werden können.

Anschließend werden die beiden Transportelemente 1, 2 von dem Produkt P getrennt bzw. außer Eingriff gebracht (Schritte G/H) und unterhalb der Transportstrecke S in einem von dem Produkt P getrennten Zustand entgegen der Transportstrecke S an den Anfang der Transportstrecke S zurückgeführt (Schritte I/J), sodass die zuvor beschriebenen Verfahrensschritte (A bis J) wiederholt werden können.

In einem bevorzugten Ausführungsbeispiel der Erfindung, dass nachstehend anhand der Figuren 3, 4 und 5 im Detail beschrieben wird, sind die Transportelemente 1, 2 kammförmig zum schrittweisen Transport einer Gruppe G von Produkten P ausgebildet und parallel zueinander angeordnet.

Der Zweck dieser erfindungsgemäßen Vorrichtung besteht darin, trotz auftretender Produkthöhentoleranzen einen sicheren schrittweisen Produkttransport zu gewährleisten, indem die Ablageposition der Produkte P vor dem Abtauchen der Transportelemente 1, 2 eindeutig bestimmt ist. Hierbei wird eine Unabhängigkeit von auftretenden Reibkräften erreicht.

Jedes der beiden Transportelemente 1, 2 hat eine fixe Teilung mit der gleichen Anzahl von Eingriffsabschnitten 11, 21 bzw. Kammzinken.

Das erste Transportelement 1 trägt an seiner Basis 12 alle hinteren Eingriffsabschnitte 11, welche für die Produktbeschleunigung dienen (Beschleunigungszinken), während das zweite Transportelement 2 an seiner Basis 22 alle vorderen Eingriffsabschnitte 21 trägt, welche für die Produktverzögerung dienen (Bremszinken). Die Eingriffsabschnitte 11, 21 sind in gleichmäßigen Abständen voneinander angeordnet und stehen jeweils von der Basis 12, 22 der Transportelemente 1, 2 in Richtung der Transportstrecke S hervor. Zur Bewegung entlang der Transportstrecke S werden die Eingriffsabschnitte 11, 21 z.B. durch eine schlitzförmige Öffnung in der horizontalen Oberfläche der Transportstrecke S über die Oberfläche der Transportstrecke S vorgestellt, um jeweils mit einem auf der Oberfläche der Transportstrecke S angeordneten Produkt P in Eingriff zu gelangen. Die Basis 12, 22 jedes der beiden Transportelemente 1, 2 ist über jeweils ein eigenes Antriebsglied 13, 23 und ein gemeinsames Antriebsglied 30 an dasselbe Antriebssystem 3 gekoppelt.

Die unterschiedlichen Transporthübe H1, H2 der beiden Transportelemente 1, 2 entlang der Transportstrecke S werden durch unterschiedliche Anlenkradien R1 (erstes Transportelement 1) und R2 (zweites Transportelement 2) auf dem Antriebsglied 30 erreicht, ohne dass weitere Antriebskomponenten benötigt werden. Der Differenzhub (H1 - H2) zwischen den Transportelementen 1, 2 wird über das Verhältnis von R1 zu R2 gesteuert. Der Vertikalhub beider Transportelemente 1, 2 ist annähernd gleich.

Die Antriebsstruktur für die beiden Transportelemente 1, 2 bzw. Kammsysteme besteht aus mehrgliedrigen Mechanismen zur Ebenenführung der Transportelemente 1, 2. Angetrieben wird dieser mehrgliedrige Mechanismus durch zwei Kurvenantriebe - einer für die Horizontal- und einer für die Vertikalbewegung.

Zum schrittweisen Transport der Gruppe G von Produkten P entlang der Transportstrecke S im Einklang mit dem erfindungsgemäßen Verfahren werden die Produkte P relativ zu den Transportelementen 1, 2 derart positioniert, dass jeweils ein Eingriffsabschnitt 11 des ersten Transportelements 1 im Abstand X hinter einem Produkt P der Gruppe G angeordnet ist und jeweils ein Eingriffsabschnitt 12 des zweiten Transportelements 2 im Abstand Y vor diesem Produkt P der Gruppe G angeordnet ist (in Transportrichtung), wie schematisch in Figur 4 dargestellt ist (Schritt A). Dabei befinden sich die Produkte P vorzugsweise bereits in den dargestellten Positionen, wenn die Eingriffsabschnitte 11, 21 der Transportelemente 1, 2 oberhalb der Transportstrecke S auftauchen. Es ist aber auch möglich, dass jedes Produkt P der Gruppe G während der Bewegung der Transportelemente 1, 2 jeweils zwischen einem Eingriffsabschnitt 11 des ersten Transportelements 1 und einem Eingriffsabschnitt 12 des zweiten Transportelements 2 positioniert wird. Durch diese Abstände X und Y zum Produkt P werden Produktbeschädigungen beim Auftauchen der Eingriffsabschnitte 11, 21 vermieden. Der Gesamtabstand zwischen den beiden Eingriffsabschnitten 11, 21 ergibt sich aus den Abständen X und Y sowie der Länge L der Produkte P.

Die Produkte P werden durch die Eingriffsabschnitte 11 des ersten Transportelements 1 von einer in die nächste Position geschoben. Denkbar ist auch, dass die Produkte durch das erste Transportelement 1 gleichfalls getragen werden.

Während der Transportbewegung (Schritte B/C) vollziehen beide Transportelemente 1, 2 horizontal unterschiedliche Bewegungen bzw. Transporthübe H1, H2 auf eigenen Bewegungsbahnen B1, B2 (vgl. Fig. 1 und 2). Das erste Transportelement 1 liegt hierbei immer mit den Eingriffsabschnitten 11 schiebend hinten an den Produkten P an. Der kürzere Transporthub H2 des zweiten Transportelements 2 bewirkt, dass sich der Abstand zwischen den Eingriffsabschnitten 11, 21 der beiden Transportelemente 1, 2 während des Transports entlang der Transportstrecke S verkleinert (Schritte D/E/F), sodass am Ende der Transportstrecke S beide Eingriffsabschnitte 11, 21 (nahezu) am Produkt anliegen (Abstand L) und hierdurch eine exakte Ablageposition garantieren, bevor die Transportelemente 1, 2 nach unten weggezogen werden (Schritte G/H).

Auf der Rückbewegung der Transportelemente 1, 2 zum Anfang der Transportstrecke S (Schritte I/J) vergrößert sich dann wieder der Abstand zwischen den beiden Eingriffsabschnitten 11, 21 aufgrund der unterschiedlichen Transporthübe H1, H2.

Der Kerngedanke der Erfindung besteht in einem positionsabhängigen Abstand zwischen den Eingriffsabschnitten 11, 21 der beiden Transportelemente 1, 2. Dieser Abstand wird zum Aufnehmen von Produkten P vergrößert, um Kollisionen mit dem Produkt P beim Anheben der Transportelemente 1, 2 zu vermeiden. Andererseits verengt sich der Abstand zwischen Eingriffsabschnitten 11, 21 der beiden Transportelemente 1, 2 zur lagegerechten Positionierung der Produkte P vor dem Abtauchen der beiden Transportelemente 1, 2.

### Bezugszeichenliste

- 1: Erstes Transportelement
- 2: Zweites Transportelement
- 3: Antriebssystem
- 11: Eingriffsabschnitt(e) des ersten Transportelements
- 12: Basis des ersten Transportelements
- 13: Antriebsglied des ersten Transportelements
- 21: Eingriffsabschnitt(e) des zweiten Transportelements
- 22: Basis des zweiten Transportelements
- 23: Antriebsglied des zweiten Transportelements
- 30: Gemeinsames Antriebsglied
- B1: Bewegungsbahn des ersten Transportelements
- B2: Bewegungsbahn des zweiten Transportelements
- G: Produktgruppe
- H1: Transporthub des ersten Transportelements
- H2: Transporthub des zweiten Transportelements
- L: Produktlänge in Transportrichtung
- P: Produkt(e)
- R1: Anlenkradius des ersten Transportelements
- R2: Anlenkradius des zweiten Transportelements
- S: Transportstrecke
- T: Transportrichtung
- X: Anfangsabstand erstes Transportelement zu Produkt (stromaufwärts)
- Y: Anfangsabstand zweites Transportelement zu Produkt (stromabwärts)
- Z1: Zentrum der Bewegungsbahn des ersten Transportelements
- Z2: Zentrum der Bewegungsbahn des zweiten Transportelements

## Patentansprüche

1. Verfahren zum schrittweisen Transport von Produkten (P) entlang einer Transportstrecke (S) unter Verwendung von ersten und zweiten Transportelementen (1, 2), die auf wenigstens einer Bewegungsbahn (B1, B2) zyklisch entlang und entgegen der Transportstrecke (S) bewegbar sind, wobei wenigstens ein Produkt (P) zwischen den beiden Transportelementen (1, 2) angeordnet wird, **dadurch gekennzeichnet, dass** das wenigstens eine Produkt (P) unter Veränderung des Abstands der beiden Transportelemente (1, 2) entlang der Transportstrecke (S) transportiert wird, wobei das wenigstens eine Produkt (P) durch das erste Transportelement (1) beschleunigt und anschließend durch das zweite Transportelement (2) abgebremst wird.

2. Verfahren nach Anspruch 1, **dadurch gekennzeichnet, dass** das Verfahren wenigstens einen der folgenden Schritte umfasst:
a. Schritt A: Anordnen des wenigstens einen Produkts (P) auf der Transportstrecke (S) relativ zu den beiden Transportelementen (1, 2), sodass das erste Transportelement (1) im Abstand (X) hinter dem Produkt (P) angeordnet ist und/oder das zweite Transportelement (2) im Abstand (Y) vor dem Produkt (P) angeordnet ist, vorzugsweise Anordnen einer Gruppe (G) von Produkten (P) auf der Transportstrecke (S) relativ zu den beiden Transportelementen (1, 2), sodass jeweils ein Eingriffsabschnitt (11) des ersten Transportelements (1) im Abstand (X) hinter einem Produkt (P) der Gruppe (G) angeordnet ist und/oder ein Eingriffsabschnitt (21) des zweiten Transportelements (2) im Abstand (Y) vor dem Produkt (P) der Gruppe (G) angeordnet ist.
b. Schritt B: Bewegen des ersten Transportelements (1) in Richtung des wenigstens einen Produkts (P), um das erste Transportelement (1) mit dem wenigstens einen Produkt (P) in Eingriff zu bringen.
c. Schritt C: Beschleunigen des wenigstens einen Produkts (P) entlang der Transportstrecke (S).
d. Schritt D: Verkürzen des Abstands zwischen dem ersten Transportelement (1) und dem zweiten Transportelement (2), vorzugsweise derart, dass das wenigstens eine Produkt (P) mit dem zweiten Transportelement (2) in Eingriff gelangt, bevorzugt während das wenigstens eine Produkt (P) mit dem ersten Transportelement (1) in Eingriff steht, wobei besonders bevorzugt der minimale Abstand der Transportelemente (1, 2) der Länge (L) des wenigstens einen Produkts (P) entspricht und/oder am Ende der Transportstrecke (S) erreicht wird.
e. Schritt E: Abbremsen des ersten Transportelements (1) bezüglich der Transportstrecke (S), vorzugsweise während das wenigstens eine Produkt (P) mit dem ersten Transportelement (1) in Eingriff gehalten wird.
f. Schritt F: Abbremsen des zweiten Transportelements (2) bezüglich der Transportstrecke (S), vorzugsweise derart, dass das wenigstens eine Produkt (P) mit dem zweiten Transportelement (2) in Eingriff gehalten wird oder in Eingriff gelangt, bevorzugt derart, dass das wenigstens eine Produkt (P) auf der Transportstrecke (S) zum Stillstand gebracht wird, besonders bevorzugt in einer Übergabeposition an eine nachgelagerte Fördereinrichtung oder zum fortgeführten Transport durch die Transportstrecke (S).
g. Schritt G: Außer-Eingriff-bringen des ersten Transportelements (1) und des wenigstens einen Produkts (P), vorzugsweise in einer Übergabeposition an eine nachgelagerte Fördereinrichtung oder zum fortgeführten Transport durch die Transportstrecke (S).
h. Schritt H: Außer-Eingriff-bringen des zweiten Transportelements (2) und des wenigstens einen Produkts (P), vorzugsweise in einer Übergabeposition an eine nachgelagerte Fördereinrichtung oder zum fortgeführten Transport durch die Transportstrecke (S), bevorzugt gleichzeitig mit Schritt G.
i. Schritt I: Bewegen des ersten Transportelements (1) entgegen der Transportstrecke (S), vorzugsweise in einem von den Produkten (P) getrennten Zustand, bevorzugt unterhalb der Transportstrecke (S).
j. Schritt J: Bewegen des zweiten Transportelements (2) entgegen der Transportstrecke (S), vorzugsweise in einem von den Produkten (P) getrennten Zustand, bevorzugt unterhalb der Transportstrecke (S), besonders bevorzugt gleichzeitig mit Schritt I.
k. Schritt K: Wiederholen der Schritte A bis J.

3. Vorrichtung zum schrittweisen Transport von Produkten (P) entlang einer Transportstrecke (S), insbesondere zur Durchführung des Verfahrens nach einem der vorangehenden Ansprüche, umfassend erste und zweite Transportelemente (1, 2), die auf wenigstens einer Bewegungsbahn (B1, B2) zyklisch entlang und entgegen der Transportstrecke (S) bewegbar sind, um wenigstens ein zwischen den beiden Transportelementen (1, 2) angeordnetes Produkt (P) unter Veränderung des Abstands der beiden Transportelemente (1, 2) entlang der Transportstrecke (S) zu transportieren, sodass das wenigstens eine Produkt (P) durch das erste Transportelement (1) beschleunigt und anschließend durch das zweite Transportelement (2) abgebremst wird.

4. Vorrichtung nach Anspruch 3, **dadurch gekennzeichnet, dass** beide Transportelemente (1, 2) jeweils eine eigene Basis (12, 22) aufweisen, die unterhalb der Transportstrecke (S) angeordnet ist, wobei zum Transport des wenigstens einen Produkts (P) entlang der Transportstrecke (S) wenigstens ein von der Basis (12, 22) vorstehender Eingriffsabschnitt (11, 21) jedes Transportelements (1, 2) über die Oberfläche der Transportstrecke (S) vorgestellt wird, vorzugsweise durch eine schlitzförmige Öffnung in der Oberfläche der Transportstrecke (S), um mit dem wenigstens einen Produkt (P) in Eingriff zu gelangen, wobei bevorzugt der wenigstens eine Eingriffsabschnitt (11, 21) jedes Transportelements (1, 2) zur Bewegung der Transportelemente (1, 2) entgegen der Transportstrecke (S) unter die Transportstrecke (S) zurückgestellt wird

5. Vorrichtung nach einem der Ansprüche 3 oder 4, **dadurch gekennzeichnet, dass** beide Transportelemente (1, 2) jeweils dieselbe Mehrzahl von Eingriffsabschnitten (11; 21) aufweisen und zum schrittweisen Transport einer Gruppe (G) von Produkten (P) entlang der Transportstrecke (S) ausgebildet sind, wobei jeweils ein Produkt (P) der Gruppe (G) zwischen einem Eingriffsabschnitt (11) des ersten Transportelements (1) und einem korrespondierenden Eingriffsabschnitt (21) des zweiten Transportelements (2) angeordnet und unter Veränderung des Abstands der beiden Eingriffsabschnitte (11, 21) entlang der Transportstrecke (S) transportiert werden kann, sodass das Produkt (P) durch den Eingriffsabschnitt (11) des ersten Transportelements (1) beschleunigt und anschließend durch den Eingriffsabschnitt (21) des zweiten Transportelements (2) abgebremst wird.

6. Vorrichtung nach einem der Ansprüche 3 bis 5, **dadurch gekennzeichnet, dass** die Bewegungsbahnen (B1, B2) und/oder Transporthübe (H1, H2) beider Transportelemente (1, 2) von einander unterschiedlich sind, wobei vorzugsweise die Bewegungsbahn (B1) und/oder der Transporthub (H1, H2) des ersten Transportelements (1) länger ist als derjenige/diejenige des zweiten Transportelements (2), wobei bevorzugt die Bewegungsbahnen (B1, B2) und/oder Transporthübe (H1, H2) beider Transportelemente (1, 2) in zueinander parallelen und/oder senkrecht zur Oberfläche der Transportstrecke (S) ausgerichteten Ebenen liegen, wobei die Oberfläche der Transportstrecke (S) besonders bevorzugt in einer horizontalen Ebene liegt.

7. Vorrichtung nach einem der Ansprüche 3 bis 6, **dadurch gekennzeichnet, dass** beide Transportelemente (1, 2) drehzahlsynchron und/oder phasensynchron entlang ihrer jeweiligen Bewegungsbahnen (B1, B2) bewegbar sind, wobei die Transportelemente (1, 2) bezüglich der Transportstrecke (S) vorzugsweise harmonische Schwingungen ausführen.

8. Vorrichtung nach einem der Ansprüche 3 bis 7, **dadurch gekennzeichnet, dass** das erste Transportelement (1) und/oder das zweite Transportelement (2) mit variabler Bahngeschwindigkeit und/oder konstanter Flächengeschwindigkeit entlang der jeweiligen Bewegungsbahn (B1, B2) bewegbar ist/sind, wobei vorzugsweise die Bahngeschwindigkeit und/oder Flächengeschwindigkeit des ersten Transportelements (1) größer ist als diejenige des zweiten Transportelements (2).

9. Vorrichtung nach einem der Ansprüche 3 bis 8, **dadurch gekennzeichnet, dass** die Bewegungen der beiden Transportelemente (1, 2) derart aufeinander abgestimmt sind, dass sich der Abstand der beiden Transportelemente (1, 2) bei der Bewegung entlang der Transportstrecke (S) verringert und bei der Bewegung entgegen der Transportstrecke (S) vergrößert, wobei vorzugsweise der minimale Abstand der Transportelemente (1, 2) der Länge (L) des wenigstens einen Produkts (P) entspricht und/oder am Ende der Transportstrecke (S) erreicht wird.

10. Vorrichtung nach einem der Ansprüche 3 bis 9, **dadurch gekennzeichnet, dass** die beiden Transportelemente (1, 2) über jeweils wenigstens ein eigenes Antriebsglied (13, 23) und/oder wenigstens ein gemeinsames Antriebsglied (30) mit einem gemeinsamen Antriebssystem (3) verbunden sind, wobei vorzugsweise die Horizontalbewegungen und die Vertikalbewegungen der Transportelemente (1, 2) über eigene Kurvenantriebe gesteuert werden, wobei bevorzugt die Horizontalbewegungen der Transportelemente (1, 2) den Transporthüben (H1, H2) der Transportelemente (1, 2) entsprechen und unterschiedlich lang sind, wobei die Vertikalbewegungen der Transportelemente (1, 2) annähernd oder exakt gleich lang sind.

## Claims

1. A method for sequential transport of products (P) along a conveying section (S) using first and second transport elements (1, 2) which can be moved cyclically along and counter to the conveying section (S) on at least one movement path (B1, B2), wherein at least one product (P) is transported between the two transport elements (1, 2) in a sequential manner, 2) is arranged, **characterized in that** said at least one product (P) is transported along the conveying section (S) by changing the distance between the two transport elements (1, 2), said at least one product (P) being accelerated by the first transport element (1) and then braked by the second transport element (2).

2. The method according to claim 1, **characterised in that** the method comprises at least one of the following steps:
a. Step A: arranging said at least one product (P) on the conveying section (S) relative to the two transport elements (1, 2) so that the first transport element (1) is arranged at a distance (X) behind the product (P) and/or the second transport element (2) is arranged at a distance (Y) in front of the product (P), preferably arranging a group (G) of products (P) on the conveying section (S) relative to the two transport elements (1, 2) so that in each case an engagement section (11) of the first transport element (1) is arranged at a distance (X) behind a product (P) of the group (G) and/or an engagement section (21) of the second transport element (2) is arranged at a distance (Y) in front of the product (P) of the group (G).
b. Step B: moving said first transport element (1) towards said at least one product (P) to bring said first transport element (1) into engagement with said at least one product (P).
c. Step C: accelerating said at least one product (P) along said conveying section (S).
d. Step D: shortening the distance between the first transport element (1) and the second transport element (2), preferably such that said at least one product (P) engages the second transport element (2), preferably while said at least one product (P) is engaged the first transport element (1), wherein particularly preferably the minimum distance between the transport elements (1, 2) corresponds to the length (L) of said at least one product (P) and/or is reached at the end of the conveying section (S).
e. Step E: Braking of the first transport element (1) with respect to the conveying section (S), preferably while said at least one product (P) is kept in engagement with the first transport element (1).
f. Step F: Braking of the second transport element (2) with respect to the conveying section (S), preferably in such a way that said at least one product (P) is held or comes into engagement with the second transport element (2), preferably in such a way that said at least one product (P) is brought to a standstill on the conveying section (S), particularly preferably in a transfer position to a downstream conveying device or for continued transport through the conveying section (S).
g. Step G: Disengaging the first transport element (1) and said at least one product (P), preferably in a transfer position to a downstream conveying device or for continued transport through the conveying section (S).
h. Step H: Disengaging the second transport element (2) and said at least one product (P), preferably in a transfer position to a downstream conveying device or for continued transport through the conveying section (S), preferably simultaneously with step G.
i. Step I: Moving the first transport element (1) against the conveying section (S), preferably in a state separated from the products (P), preferably below the conveying section (S).
j. Step J: Moving the second transport element (2) against the conveying section (S), preferably in a state separated from the products (P), preferably below the conveying section (S), particularly preferably simultaneously with step I.
k. Step K: Repeating steps A to J.

3. A device for sequential transport of products (P) along a conveying section (S), in particular for carrying out the method according to one of the preceding claims, comprising first and second transport elements (1, 2) which can be moved cyclically along and against the conveying section (S) on at least one movement path (B1, B2), in order to transport at least one product (P) arranged between the two transport elements (1, 2) along the conveying section (S) while changing the distance between the two transport elements (1, 2), so that said at least one product (P) is accelerated by the first transport element (1) and then braked by the second transport element (2).

4. A device according to claim 3, **characterised in that** both transport elements (1, 2) each have their own base (12, 22) arranged below the conveying section (S), wherein for transporting said at least one product (P) along the conveying section (S) at least one engagement portion (11, 21) of each transport element (1, 2) protruding from the base (12, 22) is provided, 2) is presented over the surface of the conveying section (S), preferably through a slot-shaped opening in the surface of the conveying section (S), in order to engage said at least one product (P), preferably said at least one engagement portion (11, 21) of each transport element (1, 2) is returned below the conveying section (S) for moving the transport elements (1, 2) against the conveying section (S).

5. A device according to one of claims 3 or 4, **characterized in that** both transport elements (1, 2) respectively have the same plurality of engaging portions (11; 21) and are designed for stepwise transport of a group (G) of products (P) along the conveying section (S), wherein one product (P) of the group (G) is arranged between an engagement portion (11) of the first transport element (1) and a corresponding engagement portion (21) of the second transport element (2) and is transported by changing the distance between the two engagement portions (11; 21), 21) can be transported along the conveying section (S) so that the product (P) is accelerated by the engagement portion (11) of the first transport element (1) and then decelerated by the engagement portion (21) of the second transport element (2).

6. A device according to one of claims 3 to 5, **characterised in that** the paths of movement (B1, B2) and/or transport strokes (H1, H2) of both transport elements (1, 2) are different from one another, wherein preferably the path of movement (B1) and/or the transport stroke (H1, H2) of the first transport element (1) is/are longer than that/those of the second transport element (2), wherein preferably the path of movement (B1) and/or the transport stroke (H1, H2) of the first transport element (1) is/are longer than that/those of the second transport element (2), wherein preferably the path of movement (B1) and/or the transport stroke (H1, H2) of the second transport element (2) is/are longer than that/those of the first transport element (1), whereas preferably the movement paths (B1, B2) and/or transport strokes (H1, H2) of both transport elements (1, 2) lie in planes parallel to one another and/or aligned perpendicularly to the surface of the conveying section (S), the surface of the conveying section (S) lying particularly preferably in a horizontal plane.

7. A device according to one of claims 3 to 6, **characterized in that** both transport elements (1, 2) can be moved along their respective paths of movement (B1, B2) synchronously in terms of speed and/or phase, the transport elements (1, 2) preferably performing harmonic oscillations with respect to the conveying section (S).

8. A device according to one of claims 3 to 7, **characterised in that** the first transport element (1) and/or the second transport element (2) is/are movable at a variable path speed and/or constant surface speed along the respective path of movement (B1, B2), whereas the path speed and/or the area speed of the first transport element (1) is greater than that of the second transport element (2).

9. A device apparatus according to one of claims 3 to 8, **characterised in that** the movements of the two transport elements (1, 2) are coordinated with one another in such a way that the distance between the two transport elements (1, 2) is reduced during movement along the conveying section (S) and increased during movement in the opposite direction to the conveying section (S), wherein preferably the minimum distance between the transport elements (1, 2) corresponds to the length (L) of said at least one product (P) and/or is reached at the end of the conveying section (S).

10. A device according to one of claims 3 to 9, **characterised in that** the two transport elements (1, 2) are each connected to a common drive system (3) via at least one separate drive member (13, 23) and/or at least one common drive member (30), wherein preferably the horizontal movements and the vertical movements of the transport elements (1, 2) are controlled by means of their own cam drives, wherein preferably the horizontal movements of the transport elements (1, 2) correspond to the transport strokes (H1, H2) of the transport elements (1, 2) and are of different lengths, wherein the vertical movements of the transport elements (1, 2) are approximately or exactly the same length.

## Revendications

1. Procédé pour le transport progressif de produits (P) le long d'un parcours de transport (S) en utilisant des premiers et seconds éléments de transport (1, 2) qui peuvent être déplacés de manière cyclique le long et à l'opposé du parcours de transport (S) sur au moins une voie de déplacement (B1, B2), dans lequel au moins un produit (P) est transporté entre les deux éléments de transport (1, 2) de manière progressifle, 2) est disposé, **caractérisé en ce que** ledit au moins un produit (P) est transporté le long du parcours de transport (S) en modifiant la distance entre les deux éléments de transport (1, 2), ledit au moins un produit (P) étant accéléré par le premier élément de transport (1) et ensuite freiné par le second élément de transport (2).

2. Procdé selon la revendication 1, **caractérisée en ce que** le procédé comprend au moins une des étapes suivantes:
a. Etape A : disposition dudit au moins un produit (P) sur la parcours de transport (S) par rapport aux deux éléments de transport (1, 2) de sorte que le premier élément de transport (1) est disposé à une distance (X) derrière le produit (P) et/ou le second élément de transport (2) soit disposé à une distance (Y) devant le produit (P), de préférence en disposant un groupe (G) de produits (P) sur la voie de transport (S) par rapport aux deux éléments de transport (1, 2) de telle sorte que, dans chaque cas, une parcours d'engagement (11) du premier élément de transport (1) est disposée à une distance (X) derrière un produit (P) du groupe (G) et/ou un parcours d'engagement (21) du second élément de transport (2) est disposé à une distance (Y) devant le produit (P) du groupe (G).
b. Etape B : déplacement dudit premier élément de transport (1) vers ledit au moins un produit (P) pour amener ledit premier élément de transport (1) en engagement avec ledit au moins un produit (P).
c. Etape C : accélération dudit au moins un produit (P) le long dudit parcours de transport (S).
d. Etape D : raccourcissement de la distance entre le premier élément de transport (1) et le second élément de transport (2), de préférence de telle sorte que ledit au moins un produit (P) engage le second élément de transport (2), de préférence pendant que ledit au moins un produit (P) s'engage dans le premier élément de transport (1), dans lequel, de manière particulièrement préférée, la distance minimale entre les éléments de transport (1, 2) correspond à la longueur (L) dudit au moins un produit (P) et/ou est atteinte à la fin du parcours de transport (S).
e. Etape E : freinage du premier élément de transport (1) par rapport au parcours de transport (S), de préférence lorsque ledit au moins un produit (P) est maintenu en engagement avec le premier élément de transport (1).
f. Etape F : freinage du second élément de transport (2) par rapport au parcours de transport (S), de préférence de telle sorte que ledit au moins un produit (P) est maintenu ou vient en prise avec le second élément de transport (2), de préférence de telle sorte que ledit au moins un produit (P) est amené à l'arrêt sur le parcours de transport (S), de préférence en position de transfert vers un dispositif de transport en aval ou pour la poursuite du transport à travers le parcours de transport (S).
g. Etape G : désengagement du premier élément de transport (1) et dudit au moins un produit (P), de préférence dans une position de transfert vers un dispositif de transport en aval ou pour la poursuite du transport à travers la parcours de transport (S).
h. Etape H : désengagement du second élément de transport (2) et dudit au moins un produit (P), de préférence dans une position de transfert vers un dispositif de transport en aval ou pour la poursuite du transport à travers le parcours de transport (S), de préférence simultanément avec l'étape G.
i. Etape I : déplacement du premier élément de transport (1) à l'opposé du parcours de transport (S), de préférence dans un état séparé des produits (P), de préférence sous le parcours de transport (S).
j. Etape J : déplacement du second élément de transport (2) à l'opposé du parcours de transport (S), de préférence dans un état séparé des produits (P), de préférence sous la parcours de trasnport (S), de manière particulièrement préfragileuse, simultanément à l'étape I.
k. Etape K : répétition des étapes A à J.

3. Dispositif pour le transport progressif de produits (P) le long d'un parcours de transport (S), en particulier pour la mise en oeuvre du procédé selon l'une des revendications précédentes, comprenant des premier et second éléments de transport (1, 2) qui peuvent être déplacés cycliquement le long et à l'opposé du parcours de transport (S) sur au moins une voie de déplacement (B1, B2), afin de transporter au moins un produit (P) disposé entre les deux éléments de transport (1, 2) le long du parcours de transport (S) tout en modifiant la distance entre les deux éléments de transport (1, 2), de sorte que ledit au moins un produit (P) est accéléré par le premier élément de transport (1) et ensuite freiné par le second élément de transport (2).

4. Dispositif selon la revendication 3, **caractérisé en ce que** les deux éléments de transport (1, 2) ont chacun leur propre base (12, 22) disposée en dessous du parcours de transport (S), dans lequel, pour transporter ledit au moins un produit (P) le long du parcours de transport (S), au moins une partie d'engagement (11, 21) de chaque élément de transport (1, 2) faisant saillie de la base (12, 22) est prévue, 2) est présenté sur la surface du parcours de transport (S), de préférence à travers une ouverture en forme de fente dans la surface du parcours de transport (S), afin d'engager ledit au moins un produit (P), de préférence ladite au moins une partie d'engagement (11, 21) de chaque élément de transport (1, 2) est renvoyée sous le parcours de transport (S) pour déplacer les éléments de transport (1, 2) contre le parcours de transport (S).

5. Dispositif selon l'une des revendications 3 ou 4, **caractérisé en ce que** les deux éléments de transport (1, 2) présentent respectivement la même pluralité de parties d'engagement (11 ; 21) et sont conçus pour le transport pas à pas d'un groupe (G) de produits (P) le long du parcours de transport (S), dans lequel un produit (P) du groupe (G) est disposé entre une partie d'engagement (11) du premier élément de transport (1) et une partie d'engagement correspondante (21) du second élément de transport (2) et est transporté en modifiant la distance entre les deux parties d'engagement (11) ; 21), 21) peut être transporté le long du parcours de transport (S) de sorte que le produit (P) est accéléré par la partie d'engagement (11) du premier élément de transport (1) et ensuite décéléré par la partie d'engagement (21) du second élément de transport (2).

6. Dispositif selon l'une des revendications 3 à 5, **caractérisé en ce que** les trajets de déplacement (B1, B2) et/ou les courses de transport (H1, H2) des deux éléments de transport (1, 2) sont différents l'un de l'autre, le trajet de déplacement (B1) et/ou la course de transport (H1, H2) du premier élément de transport (1) est/sont plus longue(s) que celle(s) du second élément de transport (2), la trajectoire (B1) et/ou le parcours de transport (H1, H2) du premier élément de transport (1) est/sont de préférence plus long(s) que celui(ceux) du second élément de transport (2), dans lequel de préférence la trajectoire de déplacement (B1) et/ou le parcours de transport (H1, H2) du second élément de transport (2) est/sont plus long(s) que celui(ceux) du premier élément de transport (1), tandis que de préférence les trajectoires de déplacement (B1, B2) et/ou les courses de transport (H1, H2) des deux éléments de transport (1, 2) se situent dans des plans parallèles entre eux et/ou orientés perpendiculairement à la surface du parcours de transport (S), la surface du parcours de transport (S) se situant particulièrement de préférence dans un plan horizontal.

7. Dispositif selon l'une des revendications 3 à 6, **caractérisé en ce que** les deux éléments de transport (1, 2) peuvent être déplacés le long de leurs trajectoires de déplacement respectives (B1, B2) de manière synchrone en termes de vitesse et/ou de phase, les éléments de transport (1, 2) effectuant de préférence des oscillations harmoniques par rapport à la parcours de transport (S).

8. Dispositif selon l'une des revendications 3 à 7, **caractérisé en ce que** le premier élément de transport (1) et/ou le second élément de transport (2) est/sont mobile(s) à une vitesse de parcours variable et/ou à une vitesse de surface constante le long de la trajectoire respective (B1, B2), tandis que la vitesse de parcours et/ou la vitesse de surface du premier élément de transport (1) sont supérieures à celle du second élément de transport (2).

9. Dispositif selon l'une des revendications 3 à 8, **caractérisé en ce que** les mouvements des deux éléments de transport (1, 2) sont coordonnés l'un avec l'autre de telle sorte que la distance entre les deux éléments de transport (1, 2) est réduite lors du mouvement le long du parcours de transport (S) et augmentée lors du mouvement dans la direction opposée au parcours de transport (S), la distance minimale entre les éléments de transport (1, 2) correspondant de préférence à la longueur (L) dudit au moins un produit (P) et/ou étant atteinte à la fin du parcours de transport (S).

10. Dispositif selon l'une des revendications 3 à 9, **caractérisé en ce que** les deux éléments de transport (1, 2) sont chacun reliés à un système d'entraînement commun (3) par l'intermédiaire d'au moins un organe d'entraînement séparé (13, 23) et/ou d'au moins un organe d'entraînement commun (30), les mouvements horizontaux et les mouvements verticaux des éléments de transport (1, 2) sont commandés au moyen de leurs propres entraînements à cames, les mouvements horizontaux des éléments de transport (1, 2) correspondant de préférence aux courses de transport (H1, H2) des éléments de transport (1, 2) et étant de longueurs différentes, les mouvements verticaux des éléments de transport (1, 2) étant approximativement ou exactement de la même longueur.
